# EUROPÄISCHE PATENTSCHRIFT

(11) **EP 3 824 022 B1**
(45) Veröffentlichungstag und Bekanntmachung des Hinweises auf die Patenterteilung: **11.09.2024**
(21) Anmeldenummer: 19736753.5
(22) Anmeldetag: 11.07.2019
(51) Int. Cl.: C08J 9/16, C08J 9/18, C08L 77/00, C08J 9/12, C08J 9/232, C08J 9/236

(54) **SCHAUMSTOFFPARTIKEL AUF BASIS VON LANGKETTIGEN POLYAMIDEN**
EXPANDED PARTICLES BASED ON HIGH CHAIN-LENGTH POLYAMIDES
PARTICULES EXPANSÉES À BASE DE POLYAMIDES À LONGUEUR DE CHAÎNE ÉLEVÉE

(30) Priorität: 18.07.2018 EP 18184128
(43) Veröffentlichungstag der Anmeldung: 26.05.2021
(73) Patentinhaber: BASF SE, 67056 Ludwigshafen am Rhein (DE)
(72) Erfinder: AHLERS, Juergen, 67056 Ludwigshafen (DE); JOPP, Dennis, 67056 Ludwigshafen (DE); REIL, Frank, 67056 Ludwigshafen (DE); GUTMANN, Peter, 67056 Ludwigshafen (DE)
(74) Vertreter: BASF IP Association
(86) Internationale Anmeldenummer: PCT/EP2019/068716
(87) Internationale Veröffentlichungsnummer: WO 2020/016102

(56) Entgegenhaltungen:
- WO-A1-2011/134996
- WO-A1-2018/050487
- DATABASE WPI Week 199537, Derwent World Patents Index; AN 1995-281020, XP002784963

## Beschreibung

Die Erfindung betrifft Schaumstoffpartikel auf Basis von Polyamiden, enthaltend 85 bis 100 Gew.-% mindestens eines langkettigen Copolyamids, sowie Verfahren zu deren Herstellung.

Die WO 2011/134996 beschreibt ein expandierbares Granulat auf Polyamidbasis, welches in einem Vorschäumer zu expandierten Polyamiden verschäumt werden kann und sich zur Herstellung eines Partikelschaums zur Verwendung in der Automobilindustrie, Luftfahrtindustrie, Bauindustrie, Verpackungsindustrie, Sport- und Freizeitindustrie, im Transportwesen und/oder im Konstruktionswesen eignet.

US 2007/036967 beschreibt u.a. steife, expandierte Polyamidgranulate mit einer Dichte von 600 kg/m³, die durch Extrusion einer Mischung von PA6 - Granulate und Polycarbonatgranulaten in einem Zweischneckenextruder mit anschließender Unterwassergranulation erhalten werden sollen.

In der JP7179645 werden zylindrische Polyamid-Schaumpartikel hoher Dichte beschrieben die durch Schmelzeextrusion eines 1 - 5 Gewichtsteile Wasser enthaltenden Polyamides und anschließender Stranggranulation erhalten werden.

WO 2014/198779 beschreibt ein Verfahren zur Herstellung von expandiertem Granulat aus einem thermoplastischen Elastomer mit einer Bruchdehnung von mehr als 100% gemessen nach DIN EN ISO 527-2, umfassend die Schritte: (a) Pressen einer treibmittelhaltigen Polymerschmelze durch eine auf eine Temperatur zwischen 150 und 280°C temperierte Lochplatte in eine Granulierkammer (b)Zerkleinern der durch die Lochplatte gepressten Polymerschmelze mit einer Schneidevorrichtung in einzelne expandierende Granulatkörner, (c) Austragen der Granulatkörner aus der Granulierkammer mit einem Flüssigkeitsstrom, wobei das Treibmittel CO₂ oder N₂ oder eine Kombination aus CO₂ und N₂ enthält und die Menge an Treibmittel in der treibmittelhaltigen Polymerschmelze im Bereich von 0,5 bis 2, Gew-% liegt und wobei die Granulierkammer von einer auf eine Temperatur zwischen 150 und 280°C temperierten Flüssigkeit durchströmt wird, deren Druck 0,1 bar bis 20 bar oberhalb des Umgebungsdrucks liegt, wobei Druck und Temperatur der Flüssigkeit in der Granulierkammer , sowie die Temperatur der Lochplatte so gewählt werden, dass die Granulatkörner in der unter Druck stehenden Flüssigkeit durch das enthaltende Treibmittel so expandiert werden, dass expandierte Granulatkörner mit einer geschlossenen Haut entstehen. Als thermoplastisches Elastomer wird u.a. ein Polyethercopolyamid (PEBA) eingesetzt.

WO 2017/013510 beschreibt geschäumte Materialien mit verbesserter Lösungsmittelbeständigkeit und einer Dichte von 40 bis 700 kg/m³ aus 50 - 90 Gew.-% eines teilkristallinen Polymeren und 10 - 50 Gew.-% eines Polyphenylenethers. Als teilkristalline Polymere können Polyamide, Polyester und Polyolefine eingesetzt werden. Die Schaumstoffe können durch Imprägnierung der Polymerschmelze mit einem Treibmittel im Extruder erhalten werden.

WO 2016/030333 beschreibt u.a. die Herstellung von expandierten Partikeln auf Basis von Polyetherblockamide (PEBA) und Polyamid 12 durch Extrusion und Imprägnierung einer Polymerschmelze mit CO₂ und anschließender Unterwassergranulation. Zur Erhöhung der amorphen Anteile wird ein Kettenverlängerer, beispielsweise ein Styrolacrylat mit reaktiven Epoxidgruppen, zugegeben.

Die WO 2018/050487 beschreibt eine Polymerfilm, enthaltend mindestens ein Copolyamid, wobei das Copolyamid hergestellt ist durch Polymerisation von 15 bis 84 Gew.-% mindestens eines Lactams und 16 bis 85 Gew.-% eines Monomerengemisches, das mindestens eine C₃₂-C₄₀-Dimersäure und mindestens ein C₄-C₁₂-Diamin enthält.

Wegen ihrer hohen chemischen Beständigkeit, Temperatur- und Spannungsrissbeständigkeit sind teilkristalline Polymere, wie Polyamid oder Polyester für Partikelschaumstoffe von Interesse. Bei teilkristallinen Polymeren ist jedoch häufig das Verarbeitungsfensters für das Verschäumen zu Schaumstoffen mit homogener Schaumstruktur und mechanischen Eigenschaften zu eng. Die Zugabe von Additiven, wie Kettenverlängerern und/oder Vernetzern, können die mechanischen Eigenschaften nachteilig beeinflussen. Die Zugabe von Füllstoffen zur Regulierung der Schmelzeviskosität führt in der Regel zu hohen Dichten und zur Versprödung der Schaumstoffe.

Aufgabe der vorliegenden Erfindung war es daher Schaumstoffpartikel auf Basis von Polyamiden und Verfahren zu deren Herstellung bereitzustellen, die insbesondere auch ohne Additive, insbesondere ohne Kettenverlängerern oder hohe Anteile an Füllstoffen, zu Schaumstoffen mit niedrigere Dichte und guten mechanischen Eigenschaften verarbeitbar sind.

Die Aufgabe wurde gelöst durch Schaumstoffpartikel mit einer Schüttdichte im Bereich von 30 bis 250 kg/m³ auf Basis von Polyamiden, enthaltend 85 bis 100 Gew.-% mindestens eines Copolyamids, erhältlich durch Polymerisation der Komponenten
(A) 15 bis 84 Gew.-% mindestens eines Lactams,
(B) 16 bis 85 Gew.-% eines Monomergemisches (M), das die Komponenten
   (B1) mindestens eine C₃₂-C₄₀-Dimersäure und
   (B2) mindestens ein C₄-C₁₂-Diamin,
      enthält,
wobei das Monomerengemisch (M) im Bereich von 45 bis 55 Mol-% der Komponente (B1) und im Bereich von 45 bis 55 Mol-% der Komponente (B2), bezogen auf die Gesamtstoffmenge des Monomerengemisches (M) enthält und die Summe der Komponenten von (A) und (B) 100 Gew.-% ergeben.

Bevorzugt bestehen die Schaumstoffpartikel aus 85 bis 100 Gew.-% des nachfolgend beschriebenen Copolyamids und 0 bis 15 Gew.-% Zusatzstoffe, wie Nukleierungsmittel, Farbstoffe, Pigmente, Füllstoffe, Flammschutzmittel, Synergisten für Flammschutzmittel, Antistatika, Stabilisatoren (wie beispielsweise Hydrolysestabilisatoren), oberflächenaktive Substanzen, Weichmacher und Infrarot-Trübungsmittel

Besonders bevorzugt bestehen die Schaumstoffpartikel aus 98 bis 99,9 Gew.-% des nachfolgend beschriebenen Copolyamids und 0,1 bis 2 Gew.-% eines Nukleierungsmittels, insbesondere Talkum.

Die Schaumstoffpartikel weisen eine Schüttdichte im Bereich von 30 bis 250 kg/m³, bevorzugt im Bereich von 40 bis 200 kg/m³ und besonders bevorzugt im Bereich von 80 bis 150 kg/m³ auf.

### Copolyamid

Erfindungsgemäß wird das Copolyamid hergestellt durch Polymerisation der Komponenten
(A) 15 bis 84 Gew.-% mindestens eines Lactams,
(B) 16 bis 85 Gew.-% eines Monomergemisches (M), das die Komponenten
   (B1) mindestens eine C₃₂-C₄₀-Dimersäure und
   (B2) mindestens ein C₄-C₁₂-Diamin
enthält, wobei das Monomerengemisch (M) im Bereich von 45 bis 55 Mol-% der Komponente (B1) und im Bereich von 45 bis 55 Mol-% der Komponente (B2), bezogen auf die Gesamtstoffmenge des Monomerengemisches (M) enthält und die Summe der Komponenten von (A) und (B) 100 Gew.-% ergeben.

Bevorzugt ist das Copolyamid hergestellt durch Polymerisation von 40 bis 83 Gew.-% der Komponente (A) und 17 bis 60 Gew.-% der Komponente (B), besonders bevorzugt von 60 bis 80 Gew.-% der Komponente (A) und 20 bis 40 Gew.-% der Komponente (B), wobei die Summe der Komponenten von (A) und (B) 100 Gew.-% ergeben.

Die Polymerisation der Komponenten (A) und (B) kann in Gegenwart eines Katalysators stattfinden. Bevorzugte Katalysatoren sind Phosphorverbindungen wie beispielsweise Natriumhypophosphit, phosphorige Säure, Triphenylphosphin oder Triphenylphosphit.

Bei der Polymerisation der Komponenten (A) und (B) bildet sich das Copolyamid, das daher Baueinheiten enthält, die von der Komponente (A) abgeleitet sind, und Baueinheiten, die von der Komponente (B) abgeleitet sind. Baueinheiten, die von der Komponente (B) abgeleitet sind, enthalten Baueinheiten, die von den Komponenten (B1) und (B2) sowie gegebenenfalls von der Komponente (B3) abgeleitet sind.

Bevorzugt ist das Copolyamid ein statistisches Copolymer.

In der Regel weist das Copolyamid eine Glasübergangstemperatur (T_{g}) im Bereich von 20 bis 50 °C, bevorzugt im Bereich von 23 bis 47 °C und insbesondere bevorzugt im Bereich von 25 bis 45 °C, bestimmt nach ISO 11357-2:2014, auf.

In der Regel weist das Copolyamid eine Schmelztemperatur (Tₘ) im Bereich von 150 bis 210 °C, bevorzugt im Bereich von 160 bis 205 °C und insbesondere bevorzugt im Bereich von 160 bis 200 °C, bestimmt gemäß ISO 11357-2:2014, auf.

Das Copolyamid weist in der Regel eine Viskositätszahl (VZ) im Bereich von 150 bis 300 ml/g, bevorzugt im Bereich von 160 bis 290 ml/g und besonders bevorzugt im Bereich von 170 bis 280 ml/g, auf, bestimmt in einer 0,5-gewichtsprozentigen Lösung des Copolyamids in einer Mischung aus Phenol/o-Dichlorbenzol im Gewichtsverhältnis 1 : 1.

### Komponente (A)

Erfindungsgemäß ist die Komponente (A) mindestens ein Lactam. Unter "Lactamen" werden im Rahmen der vorliegenden Erfindung zyklische Amide verstanden, die im Ring vorzugsweise 4 bis 12, besonders bevorzugt 5 bis 8 Kohlenstoffatome aufweisen.

Geeignete Lactame sind beispielsweise ausgewählt aus der Gruppe bestehend aus 3-Aminopropansäurelactam (Propio-3-lactam; β-Lactam; β-Propiolactam), 4-Aminobutansäurelactam (Butyro-4-lactam; γ-Lactam; γ-Butyrolactam), Aminopentansäurelactam (2-Piperidinon; δ-Lactam; δ-Valerolactam), 6-Aminohexansäurelactam (Hexano-6-lactam; ε-Lactam; ε-Caprolactam), 7-Aminoheptansäurelactam (Heptano-7-lactam; ζ-Lactam; ζ-Heptanolactam), 8-Aminooktansäurelactam (Oktano-8-lactam; η-Lactam; η-Oktanolactam), 9-Aminononansäurelactam (Nonano-9-lactam; θ-Lactam; θ-Nonanolactam), 10-Aminodekansäurelactam (Dekano-10-lactam; ω-Dekanolactam), 11-Aminoundekansäurelactam (Undekano-11-lactam; ω-Undekanolactam) und 12-Aminododekansäurelactam (Dodekano-12-lactam; ω-Dodekanolactam).

Die Lactame können unsubstituiert oder zumindest monosubstituiert sein. Für den Fall, dass zumindest monosubstituierte Lactame eingesetzt werden, können diese am Stickstoffatom und/oder an den Kohlenstoffatomen des Rings einen, zwei oder mehrere Substituenten tragen, die unabhängig voneinander ausgewählt sind aus der Gruppe bestehend aus C₁- bis C₁₀-Alkyl, C₅- bis C₆-Cycloalkyl und C₅- bis C₁₀-Aryl.

Als C₁- bis C₁₀-Alkylsubstuenten sind beispielsweise Methyl, Ethyl, Propyl, iso-Propyl, n-Butyl, sek-Butyl und tert-Butyl geeignet. Ein geeigneter C₅- bis C₆-Cycloalkylsubstituent ist beispielsweise Cyclohexyl. Bevorzugte C₅- bis C₁₀-Arylsubstituenten sind Phenyl oder Anthranyl.

Bevorzugt werden unsubstituierte Lactame eingesetzt, wobei γ-Lactam (γ-Butyrolactam), δ-Lactam (δ-Valerolactam) und ε-Lactam (ε-Caprolactam) bevorzugt sind. Besonders bevorzugt sind δ-Lactam (δ-Valerolactam) und ε-Lactam (ε-Caprolactam), wobei ε-Caprolactam insbesondere bevorzugt ist.

### Monomergemisch (M)

Erfindungsgemäß ist die Komponente (B) ein Monomergemisch (M). Das Monomergemisch (M) enthält die Komponenten (B1), mindestens eine C₃₂-C₄₀-Dimersäure, und (B2), mindestens ein C₄-C₁₂-Diamin.

Das Monomergemisch (M) enthält im Bereich von 45 bis 55 Mol-% der Komponente (B1) und im Bereich von 45 bis 55 Mol-% der Komponente (B2), bevorzugt im Bereich von 47 bis 53 Mol-% der Komponente (B1) und im Bereich von 47 bis 53 Mol-% der Komponente (B2), besonders bevorzugt im Bereich von 49 bis 51 Mol-% der Komponente (B1) und im Bereich von 49 bis 51 Mol-% der Komponente (B2), bezogen auf die Gesamtstoffmenge des Monomergemisches (M).

Die Komponente (B) kann zusätzlich eine Komponente (B3), mindestens eine C₄-C₂₀-Disäure enthalten.

Wenn die Komponente (B) zusätzlich die Komponente (B3) enthält, so ist es bevorzugt, dass die Komponente (B) im Bereich von 45 bis 54,9 Mol-% der Komponente (B1), im Bereich von 45 bis 55 Mol-% der Komponente (B2) und im Bereich von 0,1 bis 10 Mol-% der Komponente (B3) enthält, jeweils bezogen auf die Gesamtstoffmenge der Komponente (B).

Wenn die Komponente (B) zusätzlich die Komponente (B3) enthält, addieren sich die Molprozente der Komponenten (B1), (B2) und (B3) üblicherweise zu 100 Mol-%.

Das Monomergemisch (M) kann darüber hinaus Wasser enthalten.

### Komponente (B1)

Die Komponente (B1) ist erfindungsgemäß mindestens eine C₃₂-C₄₀-Dimersäure. "Mindestens eine C₃₂-C₄₀-Dimersäure" bedeutet im Rahmen der vorliegenden Erfindung sowohl genau eine C₃₂-C₄₀-Dimersäure als auch eine Mischung aus zwei oder mehreren C₃₂-C₄₀-Dimersäuren. C₃₂-C₄₀-Dimersäuren können beispielsweise durch Dimerisierung ungesättigter Fettsäuren, beispielsweise ungesättigte C₁₆-Fettsäuren, ungesättigte C₁₈-Fettsäuren und ungesättigte C₂₀-Fettsäure, erhalten werden.

Die Komponente (B1) ist insbesondere bevorzugt mindestens eine C₃₆-Dimersäure. Die C₃₆-Dimersäure wird bevorzugt hergestellt ausgehend von ungesättigten C₁₈-Fettsäuren. Besonders bevorzugt wird die C₃₆-Dimersäure hergestellt ausgehend von C₁₈-Fettsäuren, ausgewählt aus der Gruppe bestehend aus Petroselinsäure ((6Z)-Oktadeka-6-ensäure), Ölsäure ((9Z)-Oktadeka-9-ensäure), Elaidinsäure ((9E)-Oktadeka-9-ensäure), Vaccensäure ((11E)-Oktadeka-11-ensäure) und Linolsäure ((9Z,12Z)-Oktadeka-9,12-diensäure). Bei der Herstellung der Komponente (B1) aus ungesättigten Fettsäuren können sich zudem Trimersäuren bilden, außerdem können Reste an nicht reagierter ungesättigter Fettsäure übrigbleiben.

Erfindungsgemäß bevorzugt enthält die Komponente (B1) höchstens 0,5 Gew.-% nicht reagierter ungesättigter Fettsäure und höchstens 0,5 Gew.-% Trimersäure, besonders bevorzugt höchstens 0,2 Gew.-% nicht reagierter ungesättigter Fettsäure und höchstens 0,2 Gew.-% Trimersäure, jeweils bezogen auf das Gesamtgewicht der Komponente (B1).

Die einzusetzenden Dimersäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1012, Empol 1061 und Empol 1062 der Firma BASF SE sowie Unidyme 10 und Unidyme TI der Firma Arizona Chemical.

Die Komponente (B1) weist in der Regel eine Säurezahl im Bereich von 190 bis 200 mg KOH/g auf.

### Komponente (B2)

Die Komponente (B2) ist erfindungsgemäß mindestens ein C₄-C₁₂-Diamin. "Mindestens ein C₄-C₁₂-Diamin" bedeutet im Rahmen der vorliegenden Erfindung sowohl genau ein C₄-C₁₂-Diamin als auch eine Mischung aus zwei oder mehreren C₄-C₁₂-Diaminen.

Geeignete Komponenten (B2) sind beispielsweise ausgewählt aus der Gruppe bestehend aus 1,4-Diaminobutan (Butan-1,4-diamin; Tetramethylendiamin; Putrescin), 1,5-Diaminopentan (Pentamethylendiamin; Pentan-1,5-diamin; Cadaverin), 1,6-Diaminohexan (Hexamethylendiamin; Hexan-1,6-diamin), 1,7-Diaminoheptan, 1,8-Diaminoctan, 1,9-Diaminononan, 1,10-Diaminodekan (Dekamethylendiamin), 1,11-Diaminoundekan (Undekamethylendiamin) und 1,12-Diaminododekan (Dodekamethylendiamin).

Bevorzugt ist die Komponente (B2) ausgewählt aus der Gruppe bestehend aus Tetramethylendiamin, Pentamethylendiamin, Hexamethylendiamin, Dekamethylendiamin und Dodekamethylendiamin.

### Komponente (B3)

Die gegebenenfalls in der Komponente (B) enthaltene Komponente (B3) ist erfindungsgemäß mindestens eine C₄-C₂₀-Disäure. "Mindestens eine C₄-C₂₀-Disäure" bedeutet im Rahmen der vorliegenden Erfindung sowohl genau eine C₄-C₂₀-Disäure als auch eine Mischung aus zwei oder mehreren C₄-C₂₀-Disäuren.

Geeignete Komponenten (B3) sind beispielsweise ausgewählt aus der Gruppe bestehend aus Butandisäure (Bernsteinsäure), Pentandisäure (Glutarsäure), Hexandisäure (Adipinsäure), Heptandisäure (Pimelinsäure), Oktandisäure (Korksäure, Suberinsäure), Nonandisäure (Azelainsäure), Dekandisäure (Sebacinsäure), Undekandisäure, Dodekandisäure, Tridekandisäure, Tetradekandisäure und Hexadekandisäure.

Bevorzugt ist die Komponente (B3) ausgewählt aus der Gruppe bestehend aus Pentandisäure (Glutarsäure), Hexandisäure (Adipinsäure), Dekandisäure (Sebacinsäure) und Dodekandisäure.

Gegenstand der Erfindung ist auch Verfahren zur Herstellung von Schaumstoffpartikeln nach einem der Ansprüche 1 bis 6, umfassend die Stufen:
(a) Bereitstellen eines Polymeren oder einer Polymermischung, enthaltend 85 bis 100 Gew.-% mindestens eines Copolyamids, welches durch Polymerisation der Komponenten
   (A) 15 bis 84 Gew.-% mindestens eines Lactams,
   (B) 16 bis 85 Gew.-% eines Monomergemisches (M), das die Komponenten
      (B1) mindestens eine C₃₂-C₄₀-Dimersäure und
      (B2) mindestens ein C₄-C₁₂-Diamin,
      (B3) gegebenenfalls mindestens eine C₄-C₂₀-Disäure,
   wobei das Monomerengemisch (M) im Bereich von 45 bis 55 Mol-% der Komponente (B1) und im Bereich von 45 bis 55 Mol-% der Komponente (B2), bezogen auf die Gesamtstoffmenge des Monomerengemisches (M) enthält und die Summe der Komponenten von (A) und (B) 100 Gew.-% ergeben; erhältlich ist.
(b) Imprägnieren des Polymeren oder der Polymermischung mit Kohlenstoffdioxid, Stickstoff oder Mischungen davon als Treibmittel; und
(c) Entspannung des treibmittelhaltigen Polymeren oder der Polymermischung unter Aufschäumen zu Schaumstoffpartikeln.

In einer möglichen Verfahrensvariante wird in Stufe (b) Granulate des Polymeren oder der Polymermischung in einem Autoklav bei einem Druck im Bereich Druck von 18 bis 25 MPa einer Temperatur im Bereich von 180 bis 250°C für 1 bis 5 Stunden mit gasförmigem mit Kohlenstoffdioxid, Stickstoff oder Mischungen davon imprägniert.

In einer alternativen Verfahrensvariante wird in Stufe (b) das Polymere oder die Polymermischung aufgeschmolzen und die Polymerschmelze mit Kohlenstoffdioxid, Stickstoff oder Mischungen davon imprägniert wird.

Ein bevorzugtes Verfahren umfasst die Schritte:
(a) Bereitstellen eines Polymeren oder einer Polymermischung, enthaltend 85 bis 100 Gew.-% mindestens eines Copolyamids, welches durch Polymerisation der Komponenten
   (A) 15 bis 84 Gew.-% mindestens eines Lactams,
   (B) 16 bis 85 Gew.-% eines Monomergemisches (M), das die Komponenten
      (B1) mindestens eine C₃₂-C₄₀-Dimersäure und
      (B2) mindestens ein C₄-C₁₂-Diamin,
      (B3) gegebenenfalls mindestens eine C₄-C₂₀-Disäure,
   wobei das Monomerengemisch (M) im Bereich von 45 bis 55 Mol-% der Komponente (B1) und im Bereich von 45 bis 55 Mol-% der Komponente (B2), bezogen auf die Gesamtstoffmenge des Monomerengemisches (M) enthält und die Summe der Komponenten von (A) und (B) 100 Gew.-% ergeben; erhältlich ist.
(b) Aufschmelzen des Polymeren oder der Polymermischung zusammen mit 0 bis 1 Gew.-%, bevorzugt 0,1 bis 0,7 Gew.-% eines Nukleierungsmittels und Imprägnierung durch Zugabe von 1 bis 3,5 Gew.-%, bevorzugt 1,5 - 2,5 Gew.-% Kohlenstoffdioxid, Stickstoff oder Mischungen davon als Treibmittel, jeweils bezogen auf das Polymer oder die Polymermischung; und
(c) Extrusion der treibmittelhaltigen Polymerschmelze durch eine auf eine Temperatur zwischen 200°C und 280 °C temperierte Lochplatte in eine Granulierkammer; und
(d) Austragen der expandierten Schaumstoffpartikel aus der Granulierkammer, wobei die Granulierkammer von auf 5 bis 90 °C temperiertem Wasser bei einem Druck von 0,1 bar bis 20 bar oberhalb des Umgebungsdrucks liegt, durchströmt wird.

Überraschenderweise hat sich gezeigt, dass die niedrigsten Schüttdichten nicht wie erwartet bei möglichst hohen Treibmittelmengen erhalten werden, sondern dass eine Treibmittelmenge von maximal 3,5 Gew.-%, bevorzugt von maximal 2,5 Gew.-% und insbesondere von maximal 2 Gew.-% zu einer besonders geringen Schüttdichte führen. Bei einer Treibmittelmenge von weniger als 1 Gew.-% steigt die Schüttdichte ebenfalls wieder an. Die jeweiligen Massenanteile sind dabei auf die Gesamtmasse der Polymerschmelze mit darin enthaltenem Treibmittel bezogen.

Die optimal einzusetzende Treibmittelmenge hängt ab vom eingesetzten thermoplastischen Polymer und der Zusammensetzung des Treibmittels, liegt in der Regel im Bereich zwischen 1 und 3,5 Gew.-%. Besonders bevorzugt wird eine Treibmittelmischung aus Kohlendioxid und Stickstoff in Mengen im Bereich von 1 bis 3,5 Gew.-%, bevorzugt 1,5 - 2,5 Gew.-%, bezogen auf das Polymer oder die Polymermischung eingesetzt.

Das in den vorgenannten Verfahren eingesetzte Copolyamid weist bevorzugt einen Wassergehalt im Bereich von 0,05 bis 1,0 Gew.-% auf. Der Wassergehalt des eingesetzten Polyamides kann nach DIN EN ISO 15512:2017-03 bestimmt werden. Wenn der Wassergehalt über 1 Gew.-% liegt, sollte das Copolyamid vorgetrocknet werden.

In dem erfindungsgemäßen Verfahren können den Polymeren oder der Polymermischung weitere Zusatzstoffe wie Farbstoffe, Pigmente, Füllstoffe, Flammschutzmittel, Synergisten für Flammschutzmittel, Antistatika, Stabilisatoren (wie beispielsweise Hydrolysestabilisatoren), oberflächenaktive Substanzen, Weichmacher und Infrarot-Trübungsmittel in üblichen Mengen zugegeben werden.

Geeignete Infrarot-Trübungsmittel zur Reduktion des Strahlungsbeitrags zur Wärmeleitfähigkeit sind zum Beispiel Metalloxide, Nichtmetalloxide, Metallpulver, beispielsweise Aluminiumpulver, Kohlenstoff, beispielsweise Ruß, Graphit oder Diamant oder organische Farbstoffe und Farbstoffpigmente. Der Einsatz von Infrarot-Trübungsmittel ist insbesondere für Anwendungen bei hohen Temperaturen vorteilhaft. Besonders bevorzugt als Infrarot-Trübungsmittel sind Ruß, Titandioxid, Eisenoxide oder Zirkondioxid. Die vorstehend genannten Materialien können sowohl jeweils einzeln als auch in Kombination, das heißt in Form einer Mischung aus mehreren Materialien, Verwendung finden. Wenn Füllstoffe eingesetzt werden, so können diese anorganisch und/oder organisch sein.

Wenn Füllstoffe enthalten sind, so sind diese zum Beispiel organische und anorganische Pulver oder Faserstoffe sowie Mischungen daraus. Als organische Füllstoffe können zum Beispiel Holzmehl, Stärke, Flachs-, Hanf-, Ramie-, Jute-, Sisal-, Baumwoll-, Zellulose- oder Aramidfasern eingesetzt werden. Als anorganische Füllstoffe eignen sich beispielsweise Silikate, Schwerspat, Glaskugeln, Zeolithe, Metalle oder Metalloxide. Besonders bevorzugt werden pulverförmige anorganische Stoffe wie Kreide, Kaolin, Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde, Glimmer oder Wollastonit oder kugel- oder faserförmige, anorganische Stoffe, beispielsweise Eisenpulver, Glaskugeln, Glasfasern oder Kohlenstofffasern, eingesetzt. Die mittleren Teilchendurchmesser beziehungsweise bei faserförmigen Füllstoffen die Länge der Fasern sollte im Bereich der Zellgröße oder kleiner sein. Bevorzugt wird ein mittlerer Teilchendurchmesser beziehungsweise eine mittlere Länge der Fasern im Bereich von 0,1 bis 100 µm, insbesondere im Bereich von 1 bis 50 µm.

Geeignete Flammschutzmittel sind beispielsweise Tricresylphosphat, Tris-(2-chlorethyl)phosphat, Tris-(2-chlorpropyl)phosphat, Tris-(1,3-dichlorpropyl)phosphat, Tris-(2,3-dibrom-propyl)phosphat und Tetrakis-(2-chlorethyl)ethylendiphosphat. Außer den bereits genannten halogensubstituierten Phosphaten können auch anorganische Flammschutzmittel mit rotem Phosphor, Aluminiumoxidhydrat, Antimontrioxid, Arsentrioxid, Ammoniumpolyphosphat und Calciumsulfat oder Cyanursäurederivate, beispielsweise Melamin oder Mischungen aus mindestens zwei Flammschutzmitteln, zum Beispiel Ammoniumphosphat und Melamin sowie gegebenenfalls Stärke und/oder Blähgraphit zum Flammfestmachen der hergestellten geschäumten thermoplastischen Polymere verwendet werden. Im Allgemeinen hat es sich als zweckmäßig erwiesen, 0 bis 50 Gew.-%, vorzugsweise 5 bis 25 Gew.-% der Flammschutzmittel oder Flammschutzmittelmischungen bezogen auf das Gesamtgewicht des treibmittelhaltigen Systems, einzusetzen.

Vor dem Einpressen der Polymerschmelze in die Granulierkammer, wird diese mit dem Treibmittel CO₂ oder einer Mischung aus CO₂ und N₂ gemischt. Zusätzlich kann der Polymerschmelze ein Co-Treibmittel zugegeben werden. Als Co-Treibmittel können Alkane wie Ethan, Propan, Butan, Pentan, Alkohole wie Ethanol, Isopropanol, halogenierte Kohlenwasserstoffe oder FCKW's oder eine Mischung daraus dienen. Der alleinige Einsatz von CO₂ oder einer Mischung aus CO₂ und N₂ als Treibmittel ist besonders vorteilhaft, da es sich um Inertgase handelt, die unbrennbar sind, so dass bei der Produktion keine explosionsgefährdenden Atmosphären entstehen können. Dadurch werden kostenintensive Sicherheitsvorkehrungen unnötig und das Gefahrenpotential bei der Herstellung stark reduziert. Ebenfalls vorteilhaft ist, dass keine Auslagerzeit der Produkte aufgrund des Ausdampfens von flüchtigen brennbaren Stoffen erforderlich ist.

Weitere Vorteile ergeben sich, wenn der treibmittelhaltigen Polymerschmelze zusätzlich ein oder mehrere Nukleierungsmittel zugegeben werden. Als Nukleierungsmittel eignen sich insbesondere Talkum, Calciumfluorid, Natriumphenylphosphinat und feinteiliges Polytetrafluorethylen jeweils einzeln oder auch in beliebigen Mischungen. Besonders bevorzugt als Nukleierungsmittel ist Talkum. Der Anteil an Nukleierungsmittel bezogen auf die Gesamtmasse der Polymerschmelze liegt vorzugsweise bei 0,1 bis 2 Gew.-%, insbesondere bei 0,2 bis 0,8 Gew.-%.

Die Erhöhung des Wasserdrucks führt in der Regel zu niedrigeren Schüttdichten und zu einem homogeneren Produkt mit engere Partikelgrößenverteilung.

Nach Verlassen der Lochblende dehnt sich das in dem Granulat enthaltene Treibmittel aus und wird mit einem geeigneten flüssigen Kühlmittel, in der Regel Wasser oder eine wasserhaltige Mischung, in Kontakt gebracht, so dass expandierte Schaumstoffpartikel in Wasser oder einer wasserhaltigen Mischung suspendiert erhalten werden.

Die expandierten Schaumstoffpartikel können in üblicher Weise aus Wasserstrom abgetrennt werden, beispielsweise durch Filtrieren, beispielsweise mit einem Maschen- oder Bogensieb oder üblicherweise über eine kontinuierlich arbeitende Zentrifuge.

Die nach Schritt (d) erhaltenen expandierten Schaumstoffpartikel weisen eine Schüttdichte von bevorzugt 30 bis 200 kg/m³ und besonders bevorzugt von 40 bis 150 kg/m³ auf.

Die expandierten Schaumstoffpartikel sind in der Regel zumindest annähernd kugelförmig. Der Durchmesser ist abhängig von gewähltem Partikelgewicht des Ausgangsgranulats und von der hergestellten Schüttdichte. Die Schaumstoffpartikel weisen aber üblicherweise einen Durchmesser von 1 bis 30 mm, bevorzugt 3,5 bis 25 mm und insbesondere 4,5 bis 20 mm auf.

Bei nicht kugelförmigen, z. B. länglichen, zylinderförmigen oder ellipsoiden Schaumstoffpartikeln, ist mit Durchmesser die längste Abmessung gemeint.

Die Schaumstoffpartikel können mit einem Antistatikum versehen werden. Dies geschieht in einer bevorzugten Ausführungsform durch Beschichten.

Aus den erfindungsgemäß hergestellten expandierten Schaumstoffpartikeln kann man nach dem Fachmann bekannten Verfahren geschäumte Formkörper (Schaumstoffe) herstellen.

Beispielsweise können die expandierten Schaumstoffpartikel in kontinuierlichem oder diskontinuierlichem Verfahren mit Hilfe eines Klebemittels miteinander verklebt werden, beispielsweise mit literaturbekannten Polyurethan- oder Epoxydklebern.

Bevorzugt werden die erfindungsgemäßen Schaumstoffpartikel in einer geschlossenen Form unter Wärmeeinwirkung miteinander verschweißt. Dazu füllt man die Schaumstoffpartikel in die Form und leitet nach Schließen der Form Temperatur ein wodurch die Schaumstoffpartikel miteinander zum Schaumstoff, vorzugsweise mit einer Dichte im Bereich von 5 bis 300 kg/m³, verschweißen. Die Schaumstoffe können Halbzeuge sein, beispielsweise Platten, Profile oder Bahnen, oder fertige Formteile mit einfacher oder komplizierter Geometrie. Demnach schließt der Begriff Schaumstoff, Schaumstoffhalbzeuge und Schaumstoff-Formteile ein.

In einer ganz besonders bevorzugten Ausführungsform werden die Formteile nach dem Fachmann bekannten Verfahrens "VARIOTHERM" verschweißt. Hierbei werden die expandierten Partikel in eine Form/Werkzeug gepresst und anschließend die Wände des Werkzeugs über ein Heizmedium aufgeheizt und auf der gewünschten Temperatur gehalten bis die Partikel miteinander verschweißt sind. Anschließend wird ein Kühlmedium durch die Wände des Werkzeugs geleitet, welches eine rasche Kühlung der verschweißten Partikel ermöglicht um ein Kollabieren zu verhindern und ein entnehmen des fertigen Bauteils zu ermöglichen.

Wir haben nun gefunden, dass Formteile aus expandierten Schaumstoffpartikeln aus Basis von PA6.6.36 überraschend hart sind.

Diese Formteile zeigen demnach gute Zug- und Druckfestigkeiten, einen ausreichend geringen Druckverformungsrest sowie akzeptable Temperaturbeständigkeit, so dass sie für entsprechende Anwendungen im Sport- und Freizeitbereich, beispielsweise als Rahmen für Tennisschläger, Kernmaterialien für Ski oder Snowboards, Wassersportgeräte, Golfschläger, Fahrradrahmen, Spielzeuge, modellbau, in der Verpackungs- oder Automobilindustrie sowie für technische Anwendungen eingesetzt werden können. Insbesondere eigenen sich diese Formteile als Kernmaterialen von Composites, als Isolationsmaterial im Automobilbau, beispielsweise zur Batterieisolation. Die Formkörper eignen sich auch als Kernmaterial für Sandwichkonstruktionen im Schiff-, Luftfahrt-, Windenergieanlagen-, Schienen- und Fahrzeugbau. Sie können beispielweise zur Herstellung von Kraftfahrzeugteilen, wie Kofferraumböden, Hutablagen, Karosserieversteifungen, Crash-Pads und Seitentürverkleidungen dienen.

Gegenstand der Erfindung sind daher auch die Verwendung der erfindungsgemäßen Schaumstoffpartikel zur Herstellung von Schaumstoffformteilen für die Automobilindustrie, Windkraftanlagenindustrie, Bauindustrie, Verpackungsindustrie, Sport- und Freizeitindustrie, im Transport und/oder im Konstruktionswesen.

### Beispiele

Eingesetzte Rohstoffe:

| | |
|---|---|
| PA6.6/36 | Ultramid RX2240, hochviskoses Copolyamid der BASF SE, Schmelzpunkt 199°C nach ISO 3146, Dichte nach ISO 1183 von1,1 g/cm³ |
| PA6 | Ultramid^{®} B27, Polyamid 6 der BASF SE |
| Talkum | Microtalk IT Extra, Mondo Minerals |

### Messmethoden:

Zur Bestimmung der Schüttdichte wurde in Anlehnung and DIN ISO 697:1984-01 ein 500 ml Gefäß mit den expandierten Partikeln gefüllt und das Gewicht mittels einer Waage bestimmt.

Der Wassergehalt des eingesetzten Polyamides wurde nach DIN EN ISO 15512:2017-03 bestimmt.

### Beispiel 1: Schmelzeextrusion

99,5 Gewichtsanteile Polyamid PA6.6/36 mit einem Wassergehalt von 0,134 Gew.-% wurden in einem Doppelschneckenextruder (Durchmesser der Schnecken 18 mm, Verhältnis Länge/Durchmesser (UD) = 40) bei 250°C aufgeschmolzen und mit 0,5 Gewichtsanteilen Talkum vermischt. Anschließend wurden CO₂ bzw. eine Mischung aus CO₂/N₂ als Treibmittel in die Schmelze dosiert, homogen vermischt und durch eine Lochplatte (Lochdurchmesser 1 mm) extrudiert. Die Lochplatte wurde mittels Heizpatronen elektrisch beheizt und auf einer Temperatur von 280°C bzw. 240°C gehalten. Der extrudierte Strang wurde in einer Unterwassergranulierung (UWG) bei einem Druck von 1 MPa zu Schaumpartikeln mit einem mittleren Durchmesser von 2 mm und einem mittleren Gewicht von 2 mg mittels 10 an einem rotierenden Messerkranz befestigten Messer granuliert.

Die zu der Polymerschmelze zugegebenen Mengen des Treibmittels (bezogen auf 100 Teile Polyamid/Talkum-Schmelze), Temperatur der treibmittelbeladenen Schmelze und der Lochplatte, sowie die Schüttdichte der erhaltenen Schaumstoffpartikel sind in Tabelle 1 zusammengefasst.

**Tabelle 1:**

| Beispiel | CO₂ [Gew.-%] | N₂ [Gew.-%] | Temperatur [°C] der Schmelze vor der Lochplatte | Temperatur [°C] der Lochplatte | Schüttdichte [kg/m³] |
|---|---|---|---|---|---|
| 1.1 | 1,96 | - | 251 | 280 | 348 |
| 1.2 | 1,96 | 0,29 | 251 | 280 | 170 |
| 1.3 | 1,96 | 0,29 | 222 | 240 | 170 |
| 1.4 | 2,90 | 0,29 | 223 | 240 | 124 |

### Beispiel 2 und Vergleichsversuche: Autoklavverfahren

20 Granulate PA6.6/36 wurden in ein handelsübliches Teesieb aus Edelstahl gefüllt und in einen Hochdruckautoklaven gestellt. Der Autoklav wurde verschlossen, mit CO₂ bzw. N₂ bei einem Druck von 20 MPa beaufschlagt und 3 Stunden bei einer Temperatur im Bereich von 180 bis 235°C imprägniert. Anschließend wurde der Autoklav durch Öffnen eines Kugelhahns schlagartig entspannt. Nach Abkühlung des Autoklavs auf Raumtemperatur wurden die aufgeschäumten Polyamidpartikel entnommen.

Die Imprägnierbedingungen und das Schäumverhalten sind in Tabelle 2 zusammengefasst.

**Tabelle 2:**

| Beispiel | Polyamid | Imprägniermedium | Imprägnier temperatur [°C] | Schäumverhalten | Schüttdichte [kg/m³] |
|---|---|---|---|---|---|
| 2.1 | PA6/6.36 | CO₂ | 180 | Nicht geschäumt | 1100 |
| 2.2 | PA6/6.36 | CO₂ | 205 | Gut geschäumt, | 200 |
| 2.3 | PA6/6.36 | CO₂ | 210 | Überschäumt, viele Hohlräume | - |
| V1 | PA6 | N₂ | 180 | Nicht geschäumt | 1140 |
| V2 | PA6 | N₂ | 205 | Sehr leicht angeschäumt. opak | 700 |
| V3 | PA6 | N₂ | 210 | Überschäumt, hohles Gebilde, kein Partikelerhalt | - |

Im Temperaturbereich von 210 - 250°C, in dem das PA 6/6.36 im Extruder verarbeitet wird ist die Viskosität nahezu konstant. Dies führt zu einem stabileren Partikelschaumstoff. Bei PA 6 sinkt die Viskosität dagegen in dem genannten Temperaturbereich stark ab.

## Patentansprüche

1. Schaumstoffpartikel mit einer Schüttdichte im Bereich von 30 - 250 kg/m³ auf Basis von Polyamiden, enthaltend 85 bis 100 Gew.-% mindestens eines Copolyamids, erhältlich durch Polymerisation der Komponenten
(A) 15 bis 84 Gew.-% mindestens eines Lactams,
(B) 16 bis 85 Gew.-% eines Monomergemisches (M), das die Komponenten
(B1) mindestens eine C₃₂-C₄₀-Dimersäure und
(B2) mindestens ein C₄-C₁₂-Diamin,
enthält,
wobei das Monomerengemisch (M) im Bereich von 45 bis 55 Mol-% der Komponente (B1) und im Bereich von 45 bis 55 Mol-% der Komponente (B2), bezogen auf die Gesamtstoffmenge des Monomerengemisches (M) enthält und die Summe der Komponenten von (A) und (B) 100 Gew.-% ergeben.

2. Schaumstoffpartikel nach Anspruch 1, **dadurch gekennzeichnet, dass** sie aus 85 bis 100 Gew.-% des Copolyamids und 0 bis 15 Gew.-% Zusatzstoffe bestehen.

3. Schaumstoffpartikel nach Anspruch 1 oder 2, **dadurch gekennzeichnet, dass** sie eine Schüttdichte im Bereich von 40 - 200 kg/m³ aufweisen.

4. Schaumstoffpartikel nach einem der Ansprüche 1 bis 3, **dadurch gekennzeichnet, dass** die Komponente (A) ausgewählt ist aus der Gruppe bestehend aus 3-Aminopropansäurelactam, 4-Aminobutansäurelactam, 5-Aminopentansäurelactam, 6-Aminohexansäurelectam, 7-Aminoheptansäurelactam, 8-Aminooctansäurelactam, 9-Aminononansäurelactam, 10-Aminodecansäurelactam, 11-Aminoundecansäurelactam und 12-Aminododecansäurelactam.

5. Schaumstoffpartikel nach einem der Ansprüche 1 bis 4, **dadurch gekennzeichnet, dass** die Komponente (B2) ausgewählt ist aus der Gruppe bestehend aus Tetramethylendiamin, Pentamethylendiamin, Hexamethylendiamin, Decamethylendiamin und Dodecamethylendiamin.

6. Schaumstoffpartikel nach einem der Ansprüche 1 bis 5, **dadurch gekennzeichnet, dass** das Copolyamid eine Glasübergangstemperatur (T_{g}) im Bereich von 20 bis 50 °C, bestimmt nach ISO 11357-2:2014, aufweist.

7. Schaumstoffpartikel nach einem der Ansprüche 1 bis 6, **dadurch gekennzeichnet, dass** das Copolyamid eine Schmelztemperatur (Tₘ₎) im Bereich von 150 bis 210 °C, bestimmt nach ISO 11357-2:2014, aufweist.

8. Verfahren zur Herstellung von Schaumstoffpartikeln nach einem der Ansprüche 1 bis 7, umfassend die Stufen:
(a) Bereitstellen eines Polymeren oder einer Polymermischung, enthaltend 85 bis 100 Gew.-% mindestens eines Copolyamids, welches durch Polymerisation der Komponenten
(A) 15 bis 84 Gew.-% mindestens eines Lactams,
(B) 16 bis 85 Gew.-% eines Monomergemisches (M), das die Komponenten
(B1) mindestens eine C₃₂-C₄₀-Dimersäure und
(B2) mindestens ein C₄-C₁₂-Diamin,
wobei das Monomerengemisch (M) im Bereich von 45 bis 55 Mol-% der Komponente (B1) und im Bereich von 45 bis 55 Mol-% der Komponente (B2), bezogen auf die Gesamtstoffmenge des Monomerengemisches (M) enthält und die Summe der Komponenten von (A) und (B) 100 Gew.-% ergeben; erhältlich ist.
(b) Imprägnieren des Polymeren oder der Polymermischung mit Kohlenstoffdioxid, Stickstoff oder Mischungen davon als Treibmittel; und
(c) Entspannung des treibmittelhaltigen Polymeren oder der Polymermischung unter Aufschäumen zu Schaumstoffpartikeln.

9. Verfahren nach Anspruch 8, **dadurch gekennzeichnet, dass** in Stufe (b) Granulate des Polymeren oder der Polymermischung in einem Autoklav bei einem Druck im Bereich von 18 bis 25 MPa und einer Temperatur im Bereich von 180 bis 250°C für 1 bis 5 Stunden mit gasförmigem Kohlenstoffdioxid, Stickstoff oder Mischungen davon imprägniert werden.

10. Verfahren nach Anspruch 8, **dadurch gekennzeichnet, dass** in Stufe (b) das Polymere oder die Polymermischung aufgeschmolzen und die Polymerschmelze mit Kohlenstoffdioxid, Stickstoff oder Mischungen davon imprägniert wird.

11. Verfahren nach Anspruch 10, umfassend die Schritte:
(a) Bereitstellen eines Polymeren oder einer Polymermischung, enthaltend 85 bis 100 Gew.-% mindestens eines Copolyamids, welches durch Polymerisation der Komponenten
(A) 15 bis 84 Gew.-% mindestens eines Lactams,
(B) 16 bis 85 Gew.-% eines Monomergemisches (M), das die Komponenten
(B1) mindestens eine C₃₂-C₄₀-Dimersäure und
(B2) mindestens ein C₄-C₁₂-Diamin,
wobei das Monomerengemisch (M) im Bereich von 45 bis 55 Mol-% der Komponente (B1) und im Bereich von 45 bis 55 Mol-% der Komponente (B2), bezogen auf die Gesamtstoffmenge des Monomerengemisches (M) enthält und die Summe der Komponenten von (A) und (B) 100 Gew.-% ergeben; erhältlich ist.
(b) Aufschmelzen des Polymeren oder der Polymermischung zusammen mit 0 bis 1 Gew.-% eines Nukleierungsmittels und Imprägnierung durch Zugabe von 1 bis 3,5 Gew.-% Kohlenstoffdioxid, Stickstoff oder Mischungen davon als Treibmittel, jeweils bezogen auf das Polymer oder die Polymermischung; und
(c) Extrusion der treibmittelhaltigen Polymerschmelze durch eine auf eine Temperatur zwischen 200°C und 280 °C temperierte Lochplatte in eine Granulierkammer; und
(d) Austragen der expandierten Schaumstoffpartikel aus der Granulierkammer, wobei die Granulierkammer von auf 5 bis 90 °C temperiertem Wasser bei einem Druck von 0,1 bar bis 20 bar oberhalb des Umgebungsdrucks liegt, durchströmt wird.

12. Verfahren nach einem der Ansprüche 8 bis 11, **dadurch gekennzeichnet, dass** das eingesetzte Copolyamid einen Wassergehalt im Bereich von 0,05 bis 1,0 Gew.-%, bestimmt nach DIN EN ISO 15512:2017-03, aufweist.

13. Verwendung der Schaumstoffpartikel nach einem der Ansprüche 1 bis 7 zur Herstellung von Schaumstoffformteilen für die Automobilindustrie, Windkraftanlagenindustrie, Bauindustrie, Verpackungsindustrie, Sport- und Freizeitindustrie, im Transport und/oder im Konstruktionswesen.

## Claims

1. Foam particles that have a bulk density in the range of 30-250 kg/m³ and are based on polyamides, comprising 85% to 100% by weight of at least one copolyamide obtainable by polymerizing the following components:
(A) 15% to 84% by weight of at least one lactam,
(B) 16% to 85% by weight of a monomer mixture (M) comprising the following components:
(B1) at least one C₃₂-C₄₀ dimer acid and
(B2) at least one C₄-C₁₂ diamine,
wherein the monomer mixture (M) comprises in the range from 45 to 55 mol% of component (B1) and in the range from 45 to 55 mol% of component (B2), based on the total molar amount of the monomer mixture (M), and the sum total of the components of (A) and (B) is 100% by weight.

2. Foam particles according to claim 1, which consist of 85% to 100% by weight of the copolyamide and 0% to 15% by weight of additives.

3. Foam particles according to claim 1 or 2, which have a bulk density in the range of 40-200 kg/m³.

4. Foam particles according to any of claims 1 to 3, wherein component (A) is selected from the group consisting of 3-aminopropanolactam, 4-aminobutanolactam, 5-aminopentanolactam, 6-aminohexanolactam, 7-aminoheptano-lactam, 8-aminooctanolactam, 9-aminononanolactam, 10-aminodecanolactam, 11-aminoundecanolactam and 12-amino-dodecanolactam.

5. Foam particles according to any of claims 1 to 4, wherein component (B2) is selected from the group consisting of tetramethylenediamine, pentamethylenediamine, hexamethylenediamine, decamethylenediamine and dodeca-methylenediamine.

6. Foam particles according to any of claims 1 to 5, wherein the copolyamide has a glass transition temperature (T_{g}) in the range from 20 to 50°C, determined to ISO 11357-2:2014.

7. Foam particles according to any of claims 1 to 6, wherein the copolyamide has a melting temperature (Tₘ) in the range from 150 to 210°C, determined to ISO 11357-2:2014.

8. A process for producing foam particles according to any of claims 1 to 7, comprising the stages of:
(a) providing a polymer or polymer mixture comprising 85% to 100% by weight of at least one copolyamide, obtainable by polymerizing the following components:
(A) 15% to 84% by weight of at least one lactam,
(B) 16% to 85% by weight of a monomer mixture (M) comprising the following components:
(B1) at least one C₃₂-C₄₀ dimer acid and
(B2) at least one C₄-C₁₂ diamine,
wherein the monomer mixture (M) comprises in the range from 45 to 55 mol% of component (B1) and in the range from 45 to 55 mol% of component (B2), based on the total molar amount of the monomer mixture (M), and the sum total of the components of (A) and (B) is 100% by weight;
(b) impregnating the polymer or polymer mixture with carbon dioxide, nitrogen or mixtures thereof as blowing agent; and
(c) expanding the blowing agent-containing polymer or polymer mixture under foaming to give foam particles.

9. The process according to claim 8, wherein, in stage (b), pellets of the polymer or polymer mixture are impregnated with gaseous carbon dioxide, nitrogen or mixtures thereof in an autoclave at a pressure in the range from 18 to 25 MPa at a temperature in the range from 180 to 250°C for 1 to 5 hours.

10. The process according to claim 8, wherein, in stage (b), the polymer or polymer mixture is melted and the polymer melt is impregnated with carbon dioxide, nitrogen or mixtures thereof.

11. The process according to claim 10, comprising the steps of:
(a) providing a polymer or polymer mixture comprising 85% to 100% by weight of at least one copolyamide, obtainable by polymerizing the following components:
(A) 15% to 84% by weight of at least one lactam,
(B) 16% to 85% by weight of a monomer mixture (M) comprising the following components:
(B1) at least one C₃₂-C₄₀ dimer acid and
(B2) at least one C₄-C₁₂ diamine,
wherein the monomer mixture (M) comprises in the range from 45 to 55 mol% of component (B1) and in the range from 45 to 55 mol% of component (B2), based on the total molar amount of the monomer mixture (M), and the sum total of the components of (A) and (B) is 100% by weight;
(b) melting the polymer or polymer mixture together with 0% to 1% by weight of a nucleating agent and impregnating by addition of 1% to 3.5% by weight of carbon dioxide, nitrogen or mixtures thereof as blowing agent, based in each case on the polymer or polymer mixture; and
(c) extruding the blowing agent-containing polymer melt through a perforated plate at a temperature between 200°C and 280°C into a pelletizing chamber; and
(d) discharging the expanded foam particles from the pelletizing chamber, wherein water at a temperature of 5 to 90°C flows through the pelletizing chamber at a pressure of 0.1 bar to 20 bar above ambient pressure.

12. The process according to any of claims 8 to 11, wherein the copolyamide used has a water content in the range from 0.05% to 1.0% by weight, determined to DIN EN ISO 15512:2017-03.

13. The use of the foam particles according to any of claims 1 to 7 for production of foam moldings for the automotive industry, wind power industry, building industry, packaging industry, sports and leisure industry, in transport and/or in construction.

## Revendications

1. Particules expansées ayant une masse volumique apparente dans la plage de 30 à 250 kg/m³ à base de polyamides, contenant 85 à 100 % en poids d'au moins un copolyamide, pouvant être obtenues par polymérisation des composants
(A) 15 à 84 % en poids d'au moins un lactame,
(B) 16 à 85 % en poids d'un mélange de monomères (M) qui contient les composants
(B1) au moins un acide dimère en C₃₂-C₄₀ et
(B2) au moins une diamine en C₄-C₁₂,
le mélange de monomères (M) contenant le composant (B1) en une quantité dans la plage de 45 à 55 % en moles et le composant (B2) en une quantité dans la plage de 45 à 55 % en moles, par rapport à la quantité totale du mélange de monomères (M), et la somme des pourcentages des composants (A) et (B) étant de 100 % en poids.

2. Particules expansées selon la revendication 1, **caractérisées en ce qu'**elles sont constituées de 85 à 100 % en poids du copolyamide et de 0 à 15 % en poids d'additifs.

3. Particules expansées selon la revendication 1 ou 2, **caractérisées en ce qu'**elles ont une masse volumique apparente dans la plage de 40 à 200 kg/m³.

4. Particules expansées selon l'une des revendications 1 à 3, **caractérisées en ce que** le composant (A) est choisi dans le groupe consistant en le 3-aminopropanolactame, le 4-aminobutanolactame, le 5-aminopentanolactame, le 6-aminohexanolactame, le 7-aminoheptanolactame, le 8-aminooctanolactame, le 9-aminononanolactame, le 10-aminodécanolactame, le 11-aminoundécanolactame et le 12-aminododécanolactame.

5. Particules expansées selon l'une des revendications 1 à 4, **caractérisées en ce que** le composant (B2) est choisi dans le groupe consistant en la tétraméthylènediamine, la pentaméthylènediamine, l'hexaméthylènediamine, la décaméthylènediamine et la dodécaméthylènediamine.

6. Particules expansées selon l'une des revendications 1 à 5, **caractérisées en ce que** le copolyamide présente une température de transition vitreuse (T_{g}) dans la plage de 20 à 50 °C, déterminée selon ISO 11357-2:2014.

7. Particules expansées selon l'une des revendications 1 à 6, **caractérisées en ce que** le copolyamide présente une température de fusion (Tₘ) dans la plage de 150 à 210 °C, déterminée selon ISO 11357-2:2014.

8. Procédé de fabrication de particules expansées selon l'une des revendications 1 à 7, comprenant les étapes suivantes :
(a) fourniture d'un polymère ou d'un mélange de polymères, contenant 85 à 100 % en poids d'au moins un copolyamide, qui peut être obtenu par polymérisation des composants
(A) 15 à 84 % en poids d'au moins un lactame,
(B) 16 à 85 % en poids d'un mélange de monomères (M) qui contient les composants
(B1) au moins un acide dimère en C₃₂-C₄₀ et
(B2) au moins une diamine en C₄-C₁₂,
le mélange de monomères (M) contenant le composant (B1) en une quantité dans la plage de 45 à 55 % en moles et le composant (B2) en une quantité dans la plage de 45 à 55 % en moles, par rapport à la quantité totale du mélange de monomères (M), et la somme des pourcentages des composants (A) et (B) étant de 100 % en poids,
(b) imprégnation du polymère ou du mélange de polymères avec du dioxyde de carbone, de l'azote ou des mélanges de ceux-ci, en tant qu'agent porogène ; et
(c) détente du polymère ou du mélange de polymères contenant l'agent porogène, avec expansion conduisant à des particules expansées.

9. Procédé selon la revendication 8, **caractérisé en ce que** dans l'étape (b), on imprègne des granulés du polymère ou du mélange de polymères dans un autoclave sous une pression dans la plage de 18 à 25 MPa et à une température dans la plage de 180 à 250 °C pendant 1 à 5 heures, avec du dioxyde de carbone, de l'azote ou des mélanges de ceux-ci, gazeux.

10. Procédé selon la revendication 8, **caractérisé en ce que** dans l'étape (b), le polymère ou le mélange de polymères est fondu, et la masse fondue de polymère est imprégnée avec du dioxyde de carbone, de l'azote ou des mélanges de ceux-ci.

11. Procédé selon la revendication 10, comprenant les étapes suivantes :
(a) fourniture d'un polymère ou d'un mélange de polymères contenant 85 à 100 % en poids d'au moins un copolyamide, qui peut être obtenu par polymérisation des composants
(A) 15 à 84 % en poids d'au moins un lactame,
(B) 16 à 85 % en poids d'un mélange de monomères (M) qui contient les composants
(B1) au moins un acide dimère en C₃₂-C₄₀ et
(B2) au moins une diamine en C₄-C₁₂,
le mélange de monomères (M) contenant le composant (B1) en une quantité dans la plage de 45 à 55 % en moles et le composant (B2) en une quantité dans la plage de 45 à 55 % en moles, par rapport à la quantité totale du mélange de monomères (M), et la somme des pourcentages des composants (A) et (B) étant de 100 % en poids,
(b) fusion du polymère ou du mélange de polymères avec 0 à 1 % en poids d'un agent de nucléation, et imprégnation par addition de 1 à 3,5 % en poids de dioxyde de carbone, d'azote ou de mélanges de ceux-ci, en tant qu'agent porogène, dans chaque cas par rapport au polymère ou au mélange de polymères ; et
(c) extrusion de la masse fondue de polymère contenant l'agent porogène dans une chambre de granulation, à travers une plaque perforée portée à l'équilibre de température entre 200 °C et 280 °C ; et
(d) expulsion des particules expansées de la chambre de granulation, la chambre de granulation étant traversée par de l'eau portée à l'équilibre de température à 5 à 90 °C sous une pression de 0,1 bar à 20 bar supérieure à la température ambiante.

12. Procédé selon l'une des revendications 8 à 11, **caractérisé en ce que** le copolyamide utilisé présente une teneur en eau dans la plage de 0,05 à 1,0 % en poids, déterminée selon DIN EN ISO 15512:2017-03.

13. Utilisation des particules expansées selon l'une des revendications 1 à 7 pour la fabrication d'objets moulés en mousse pour l'industrie automobile, l'industrie des éoliennes, l'industrie du bâtiment, l'industrie de l'emballage, l'industrie des sports et loisirs, dans le transport et/ou en construction.
